# EUROPEAN PATENT APPLICATION

(11) **EP 4 339 575 A1**
(43) Date of publication of application: **20.03.2024**
(21) Application number: 23197179.7
(22) Date of filing: 13.09.2023
(51) Int. Cl.: G01L 9/00, G01L 19/06

(54) **PRESSURE SENSOR**

(30) Priority: 16.09.2022 JP 2022148433
(71) Applicant: TDK Corporation, Tokyo 103-6128 (JP)
(72) Inventor: SASAHARA, Tetsuya, Tokyo, 103-6128 (JP); UNNO, Ken, Tokyo, 103-6128 (JP); KOBAYASHI, Masanori, Tokyo, 103-6128 (JP); HATA, Tetsuo, Tokyo, 103-6128 (JP)
(74) Representative: Epping - Hermann - Fischer

(57) **Abstract**

Adhesion of a water droplet or the like on a membrane is detected before an abnormality occurs in a detection value of a Wheatstone bridge circuit. A pressure sensor includes: a Wheatstone bridge circuit formed by a plurality of resistors on a membrane; a plurality of bridge electrodes which are electrically connected to the Wheatstone bridge circuit and constitute a portion of an outer surface of the membrane and to which wires for connecting the Wheatstone bridge circuit to an outside are connected; a detection electrode which is disposed between one bridge electrode and another bridge electrode on the membrane, constitutes another portion of the outer surface, and is provided separately from any of the bridge electrodes; and a resistance change detection unit detecting a change in resistance between the detection electrode and at least one of the plurality of bridge electrodes.

## Description

### BACKGROUND OF THE INVENTION

### 1. Field of the Invention

The present invention relates to a pressure sensor that detects distortion caused by deformation of a membrane using a change in resistance.

### 2. Description of the Related Art

A pressure sensor is known that detects the distortion of a membrane (also referred to as a diaphragm) from a change in resistance, using a piezoresistive effect. In the pressure sensor, the distortion caused by the deformation of the membrane is detected from the output of a Wheatstone bridge circuit formed by resistors provided on the membrane. In addition, among the pressure sensors, there are some pressure sensors that require high reliability even in a harsh environment such as a high temperature and high humidity environment.

As a technique for improving the reliability of the pressure sensor, a technique has been proposed that provides a protective film for protecting a Wheatstone bridge circuit (see Patent Document 1 and the like). However, it is not possible to completely cover electrodes which are connected to the Wheatstone bridge circuit on a membrane with a protective film or the like because wires for connection to the outside are formed.

Therefore, if a water droplet adheres to the membrane, there is a concern that the water droplet will grow to a size at which the water droplet lies across a plurality of electrodes connected to the Wheatstone bridge circuit. In this case, a short path is formed in the Wheatstone bridge circuit due to the water droplet. When the pressure sensor continues to be used in this state, there is a concern that an abnormal value will be output or the circuit will be damaged due to ion migration or the like.

### CITATION LIST

### PATENT DOCUMENT

Patent Document 1: JP 2005-249520 A

### SUMMARY OF THE INVENTION

An object of the present invention is to provide a pressure sensor that can detect adhesion of a water droplet or the like on a membrane before an abnormality occurs in a detection value of a Wheatstone bridge circuit.

In order to achieve the above object, according to a first aspect of the present invention, there is provided a pressure sensor including: a Wheatstone bridge circuit formed by resistors on a membrane; bridge electrodes electrically connected to the Wheatstone bridge circuit and constituting a portion of an outer surface of the membrane, wires for connecting the Wheatstone bridge circuit to an outside being connected to the bridge electrodes; a detection electrode disposed between one of the bridge electrodes and the other one of the bridge electrodes on the membrane, constituting another portion of the outer surface, and provided separately from any of the bridge electrodes; and a resistance change detection unit detecting a change in resistance between the detection electrode and at least one of the bridge electrodes.

In the pressure sensor according to the first aspect of the present invention, the detection electrode which constitutes a portion of the outer surface of the membrane together with the bridge electrodes is provided between the bridge electrodes, and the resistance change detection unit which detects the change in resistance between the detection electrode and the bridge electrode detects the adhesion of the water droplet or the like between the detection electrode and the bridge electrode. Therefore, the pressure sensor can detect the formation of the water droplet on the outer surface before the water droplet grows to a size at which the water droplet spreads across the bridge electrodes.

In addition, for example, the bridge electrodes and the detection electrode are disposed in an outer peripheral region surrounding a central region, in which the Wheatstone bridge circuit is disposed, on the membrane, and the detection electrode is disposed between the one of the bridge electrodes and the other one of the bridge electrodes in a first direction which is a direction surrounding the central region.

In the pressure sensor, the distance between the bridge electrodes can be increased. Therefore, it is possible to suitably detect the adhesion of the water droplet or the like on the outer surface using the detection electrode before the water droplet grows to the size at which the water droplet spreads across the bridge electrodes.

Further, for example, the detection electrode may have a first detection portion and a second detection portion which are disposed on the membrane with at least one of the bridge electrodes interposed therebetween and are electrically connected to each other.

The pressure sensor has the first detection portion and the second detection portion, which makes it possible to detect the water droplets in a plurality of regions interposed between the bridge electrodes. In addition, since the first detection portion and the second detection portion are electrically connected to each other, it is possible to detect the water droplets in a plurality of regions with a simple configuration.

Furthermore, for example, the detection electrode may have a first detection portion and a second detection portion which are disposed on the membrane with at least one of the plurality of bridge electrodes interposed therebetween, and the resistance change detection unit may independently detect a change in resistance between the first detection portion and at least one of the bridge electrodes and a change in resistance between the second detection portion and at least one of the bridge electrodes.

The pressure sensor has the first detection portion and the second detection portion, which makes it possible to detect the formation of the water droplets in a plurality of regions interposed between the bridge electrodes. In addition, it is possible to distinguish and detect to which of the plurality of regions the water droplet or the like adheres.

According to a second aspect of the present invention, there is provided a pressure sensor including: a Wheatstone bridge circuit formed by resistors on a membrane; bridge electrodes electrically connected to the Wheatstone bridge circuit and constituting a portion of an outer surface of the membrane, wires for connecting the Wheatstone bridge circuit to an outside being connected to the bridge electrode; a first detection electrode and a second detection electrode which are disposed side by side between one of the bridge electrodes and the other one of the bridge electrodes on the membrane, constituting another portion of the outer surface, are provided separately from any of the bridge electrodes, and provided separately from each other; and a resistance change detection unit detecting a change in resistance between the first detection electrode and the second detection electrode.

In the pressure sensor according to the second aspect of the present invention, the first detection electrode and the second detection electrode which constitute a portion of the outer surface of the membrane together with the bridge electrodes are provided between the bridge electrodes, and the resistance change detection unit that detects a change in resistance between the first detection electrode and the second detection electrode can detect the adhesion of the water droplet or the like between the bridge electrodes. The pressure sensor can detect the formation of the water droplet on the outer surface before the water droplet grows to the size at which the water droplet spreads across the bridge electrodes.

Moreover, for example, the bridge electrodes, the first detection electrode, and the second detection electrode are disposed on the membrane to be in an outer peripheral region surrounding a central region, in which the Wheatstone bridge circuit is disposed, on the membrane, and the first detection electrode and the second detection electrode are disposed between the one of the bridge electrodes and the other one of the bridge electrodes in a first direction which is a direction surrounding the central region.

In the pressure sensor, since the distance between the bridge electrodes can be increased, the adhesion of the water droplet or the like on the outer surface can be suitably detected by the first and second detection electrodes before the water droplet grows to the size at which the water droplet spreads across the bridge electrodes.

In addition, the first detection electrode and the second detection electrode may be arranged in a second direction intersecting a first direction which is a direction surrounding the central region.

In the pressure sensor, both the water droplet formed around the bridge electrodes and the water droplet formed between the bridge electrodes can be suitably detected by the first and second detection electrodes.

Further, for example, each of the first detection electrode and the second detection electrode may have a first detection portion and a second detection portion which are disposed on the membrane with at least one of the bridge electrodes interposed therebetween and are electrically connected to each other.

The pressure sensor has the first detection portion and the second detection portion, which makes it possible to appropriately detect the formation of the water droplets or the like in a plurality of regions interposed between the bridge electrodes. Further, since the first detection portion and the second detection portion are electrically connected to each other, it is possible to detect the water droplets in a plurality of regions with a simple configuration.

Furthermore, for example, each of the first detection electrode and the second detection electrode may have a first detection portion and a second detection portion that are disposed on the membrane with at least one of the bridge electrodes interposed therebetween, and the resistance change detection unit may independently detect a change in resistance between the first detection portion of the first detection electrode and the first detection portion of the second detection electrode and a change in resistance between the second detection portion of the first detection electrode and the second detection portion of the second detection electrode.

The pressure sensor has the first detection portion and the second detection portion, which makes it possible to detect the formation of the water droplets in a plurality of regions interposed between the bridge electrodes. In addition, it is possible to distinguish and detect which of the plurality of regions the water droplet or the like adheres to.

### BRIEF DESCRIPTION OF THE DRAWINGS

FIG. 1 is a schematic cross-sectional view illustrating a pressure sensor according to a first embodiment of the present invention;
FIG. 2 is a schematic plan view illustrating the pressure sensor according to the first embodiment as viewed from above;
FIG. 3 is a circuit diagram illustrating the pressure sensor illustrated in FIG. 2;
FIGS. 4A and 4B are conceptual diagrams illustrating a detection operation of a resistance change detection unit illustrated in FIG. 3;
FIG. 5 is a conceptual diagram illustrating a first state of a pressure sensor according to a first modification example;
FIG. 6 is a conceptual diagram illustrating a second state of the pressure sensor according to the first modification example;
FIGS. 7A and 7B are conceptual diagrams illustrating a detection operation of a resistance change detection unit in a pressure sensor according to a second modification example;
FIGS. 8A and 8B are conceptual diagrams illustrating a detection operation of a resistance change detection unit in a pressure sensor according to a third modification example;
FIG. 9 is a schematic plan view illustrating a pressure sensor according to a second embodiment as viewed from above;
FIG. 10 is a schematic plan view illustrating a pressure sensor according to a third embodiment as viewed from above;
FIGS. 11A and 11B are conceptual diagrams illustrating a detection operation of a resistance change detection unit in the pressure sensor according to the third embodiment;
FIGS. 12A and 12B are conceptual diagrams illustrating a detection operation of a resistance change detection unit in a pressure sensor according to a fourth modification example;
FIG. 13 is a schematic plan view illustrating a pressure sensor according to a fourth embodiment as viewed from above;
FIG. 14 is a schematic plan view illustrating a pressure sensor according to a fifth embodiment as viewed from above; and
FIG. 15 is a schematic plan view illustrating a pressure sensor according to a sixth embodiment as viewed from above.

### DETAILED DESCRIPTION OF THE PREFERRED EMBODIMENTS

Hereinafter, the present invention will be described on the basis of embodiments illustrated in the drawings.

### First Embodiment

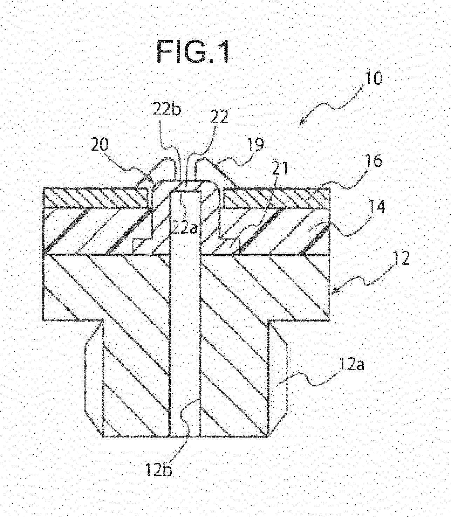

FIG. 1 is a schematic cross-sectional view illustrating a pressure sensor 10 according to an embodiment of the present invention. As illustrated in FIG. 1, the pressure sensor 10 has a hollow cylindrical stem 20. The stem 20 is made of metal such as steel, aluminum alloy, stainless steel, or nickel alloy. The stem 20 has a membrane 22 that constitutes an end wall disposed at one end of a hollow cylinder, and the membrane 22 is deformed according to pressure. It is preferable that the stem 20 and the membrane 22 are particularly made of austenitic SUS304 or SUS316, precipitation hardening SUS630 or SUS631, or the like in addition to the above-described metal from the viewpoint of durability at high temperature and the like.

As illustrated in FIG. 1, the other end of the stem 20 is an open end of a hollow portion, and the hollow portion of the stem 20 communicates with a flow channel 12b of a connection member 12. In the pressure sensor 10, a fluid introduced into the flow channel 12b is guided from the hollow portion of the stem 20 to an inner surface 22a which is the other surface of the membrane 22, and fluid pressure acts on the membrane 22.

A flange portion 21 is formed around the open end of the stem 20 so as to protrude outward from an axis of the stem 20. The flange portion 21 is interposed between the connection member 12 and a pressing member 14 such that the flow channel 12b leading to the inner surface 22a of the membrane 22 is sealed.

The connection member 12 has a thread groove 12a for fixing the pressure sensor 10. The pressure sensor 10 is fixed to, for example, a pressure chamber, in which the fluid to be measured is enclosed, through the thread groove 12a. Therefore, the flow channel 12b formed inside the connection member 12 and the inner surface 22a of the membrane 22 in the stem 20 airtightly communicate with the pressure chamber in which the fluid to be measured is present.

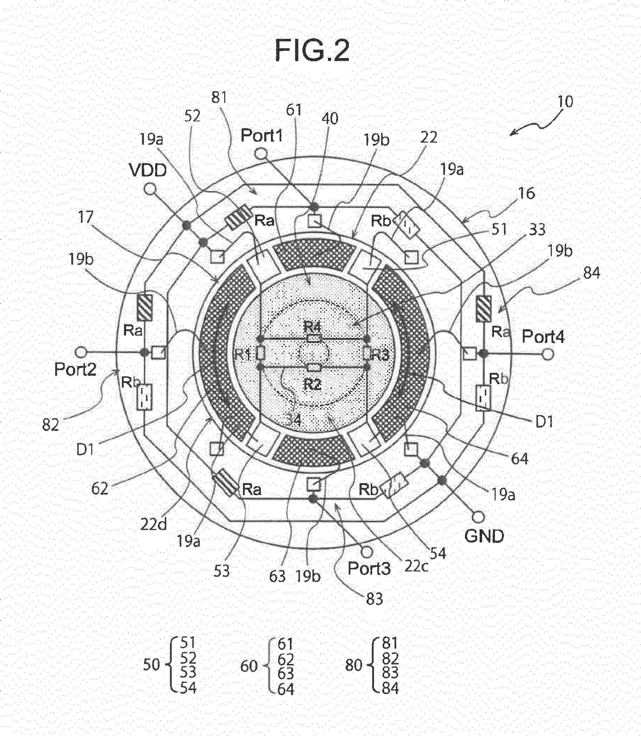

A circuit substrate 16 is attached to an upper surface of the pressing member 14. The circuit substrate 16 has a ring shape that surrounds the stem 20, but the shape of the circuit substrate 16 is not limited thereto. The circuit substrate 16 receives a detection signal from a Wheatstone bridge circuit 33 that is formed on the membrane 22 and includes a resistance change detection unit 80 (see FIG. 2). In addition, the circuit substrate 16 is provided with, for example, a circuit to which the detection signal is transmitted from the Wheatstone bridge circuit 33.

FIG. 2 is a plan view illustrating the pressure sensor 10 illustrated in FIG. 1 as viewed from above (the side of the outer surface 22b of the membrane 22). As illustrated in FIG. 2, the membrane 22 is disposed in a through hole of the ring-shaped circuit substrate 16.

As illustrated in FIG. 2, the pressure sensor 10 includes the Wheatstone bridge circuit 33 formed on the membrane 22, a plurality of bridge electrodes 50 and detection electrodes 60 also formed on the membrane 22, and the resistance change detection unit 80 disposed on the circuit substrate 16.

As illustrated in FIG. 2, the Wheatstone bridge circuit 33 is formed by a plurality of resistors R1, R2, R3, and R4 on the membrane 22 and is disposed in a central region 22c on the membrane 22. The resistors R1, R2, R3, and R4 generate distortion corresponding to the deformation of the membrane 22, and the resistance values thereof change depending on the deformation of the membrane 22. The resistors R1, R2, R3, and R4 are connected by electric wires 34 to form the Wheatstone bridge circuit 33.

Since the amount of deformation of the membrane 22 is changed by the pressure of the fluid acting on the membrane 22, the Wheatstone bridge circuit 33 can detect fluid pressure which is the pressure of the fluid acting on the membrane 22. That is, the resistors R1 to R4 constituting the Wheatstone bridge circuit 33 are provided at positions where the membrane 22 illustrated in FIGS. 1 and 2 is deformed and distorted by the fluid pressure and are configured such that the resistance values thereof change depending on the amount of distortion.

The resistors R1, R2, R3, and R4 and the electric wires 34 that constitute the Wheatstone bridge circuit 33 are manufactured by, for example, patterning a distortion resistance film, which is a conductive thin film, into a predetermined shape. A material forming the distortion resistance film is not particularly limited and includes, for example, Cr and Al. Since the distortion resistance film includes Cr and Al, a temperature coefficient of resistance (TCR) and a temperature coefficient of sensitivity (TCS) in a high-temperature environment are stabilized, which makes it possible to detect pressure with high accuracy. In addition, the content of Cr and Al falls within a predetermined range, which makes it possible to achieve both a high gauge factor and high temperature stability at a higher level.

The distortion resistance film may include elements other than Cr and Al. For example, the distortion resistance film may include O and N. For O and N included in the distortion resistance film, O and N that remain without being removed from a reaction chamber when the distortion resistance film is formed may be incorporated into the distortion resistance film. Further, for example, O and N included in the distortion resistance film may be used as atmosphere gases during film formation or annealing to be intentionally introduced into the distortion resistance film.

In addition, the distortion resistance film may include metal elements other than Cr and Al. In some cases, the distortion resistance film includes a very small amount of metal other than Cr and Al and non-metal elements, and the gauge factor and temperature characteristics of the distortion resistance film are improved by heat treatment such as annealing. Examples of the metal other than Cr and Al and the non-metal elements included in the distortion resistance film include Ti, Nb, Ta, Ni, Zr, Hf, Si, Ge, C, P, Se, Te, Zn, Cu, Bi, Fe, Mo, W, As, Sn, Sb, Pb, B, Ge, In, Tl, Ru, Rh, Re, Os, Ir, Pt, Pd, Ag, Au, Co, Be, Mg, Ca, Sr, Ba, Mn, and rare earth elements.

The distortion resistance film can be formed by a thin film method such as sputtering or vapor deposition. The resistors R1 to R4 can be formed, for example, by patterning a thin film into a meandering shape. The thickness of the distortion resistance film is not particularly limited, but is preferably equal to or less than 10 and more preferably 0.1 µm to 1 µm. Further, the electric wires 34 are formed by patterning the distortion resistance film. However, the electric wires may be formed by a conductive film or layer different from the distortion resistance film.

In addition, an underlying insulating film for insulating the distortion resistance film from the outer surface 22b of the membrane 22 is formed below the distortion resistance film, which is not illustrated in FIG. 2. The underlying insulating film is formed in both the central region 22c and an outer peripheral region 22d on the membrane 22 so as to cover substantially the entire outer surface 22b of the membrane 22 (see FIG. 1). The underlying insulating film is configured as an insulating film such as silicon oxide, silicon nitride, or silicon oxynitride. The thickness of the underlying insulating film is preferably equal to or less than 10 µm and more preferably 1 µm to 5 µm. The underlying insulating film can be formed on the outer surface 22b of the membrane 22 by a vapor deposition method such as CVD.

As illustrated in FIG. 2, a protective film 40 that covers the Wheatstone bridge circuit 33 from above is formed in the central region 22c in which the Wheatstone bridge circuit 33 is disposed. The protective film 40 is configured as, for example, an insulating thin film, similarly to the underlying insulating film. In FIG. 2, the protective film 40 is illustrated in gray.

Since the resistors R1 to R4 included in the Wheatstone bridge circuit 33 are covered with the protective film 40, they do not form a portion of the outer surface of the pressure sensor 10. Therefore, the resistors R1 to R4 in the Wheatstone bridge circuit 33 are appropriately shielded from an installation environment of the pressure sensor 10 and protected from the adhesion of water droplets or the like as long as the protective film 40 is not peeled off.

As illustrated in FIG. 2, a plurality of bridge electrodes 50 are disposed on the membrane 22. The plurality of bridge electrodes 50 have a first bridge electrode 51, a second bridge electrode 52, a third bridge electrode 53, and a fourth bridge electrode. The first to fourth bridge electrodes 51 to 54 which are the plurality of bridge electrodes 50 are disposed in the outer peripheral region 22d surrounding the central region 22c, in which the Wheatstone bridge circuit 33 is disposed, on the membrane 22.

The first to fourth bridge electrodes 51 to 54 are electrically connected to the Wheatstone bridge circuit 33 through the electric wires 34. The plurality of bridge electrodes 50 are exposed from the protective film 40 and constitute a portion of an outer surface 17 of the membrane 22. The first to fourth bridge electrodes 51 to 54 are connected to intermediate wires 19a which are wires for connecting the Wheatstone bridge circuit 33 to the outside.

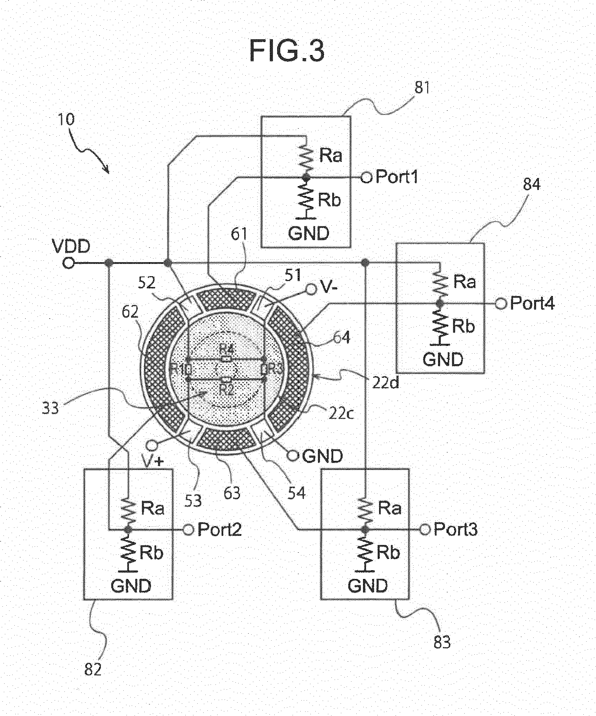

FIG. 3 is a circuit diagram illustrating the pressure sensor 10 illustrated in FIG. 2. The two intermediate wires 19a illustrated in FIG. 2 connect the first and third bridge electrodes 51 and 53 and the circuit substrate 16 and transmit detection voltages V+ and V- of the Wheatstone bridge circuit 33 to the circuit substrate 16 as illustrated in FIG. 3. In addition, one intermediate wire 19a connects the second bridge electrode 52 and a power supply voltage VDD of the circuit substrate 16 to supply power to the Wheatstone bridge circuit 33. Further, another intermediate wire 19a connects the fourth bridge electrode 54 to the ground GND. Furthermore, the disposition of the first to fourth bridge electrodes 51 to 54 is not limited to the examples illustrated in FIGS. 2 and 3. For example, the positions of the first to fourth bridge electrodes 51 to 54 are interchangeable.

As illustrated in FIG. 2, the detection electrode 60 is disposed on the membrane 22 of the pressure sensor 10. The detection electrode 60 has four detection portions of a first portion 61, a second portion 62, a third portion 63, and a fourth portion 64. Each of the first to fourth detection portions 61 to 64 of the detection electrode 60 is disposed between one bridge electrode 51, 52, 53, or 54 and another bridge electrode 51, 52, 53, or 54. That is, the first portion 61 as the first detection portion is disposed between the first bridge electrode 51 and the second bridge electrode 52, and the second portion 62 as the second detection portion is disposed between the second bridge electrode 52 and the third bridge electrode 53.

The detection electrode 60 is exposed from the protective film 40 similarly to the plurality of bridge electrodes 50 and constitutes another portion of the outer surface 17 of the membrane 22. Further, the detection electrode 60 is disposed in the outer peripheral region 22d surrounding the central region 22c similarly to the plurality of bridge electrodes 50. Each of the first to fourth portions 61, 62, 63, and 64 of the detection electrode 60 is provided separately from any of the first to fourth bridge electrodes 51 to 54.

Each of the first to fourth portions 61, 62, 63, and 64 of the detection electrode 60 is disposed between one bridge electrode 51, 52, 53, or 54 and another bridge electrode 51, 52, 53, or 54 in a first direction D1 which is a direction (circumferential direction) surrounding the central region 22c.

In addition, in the pressure sensor 10 illustrated in FIG. 2, the detection electrode 60 has four portions of the first to fourth portions 61, 62, 63, and 64. However, the detection electrode 60 is not limited thereto. For example, it is considered that the detection electrode 60 has only the first portion 61 or has the first portion 61 and the third portion 63. For example, a case in which a water droplet adheres only to a portion in which the first portion 61 is provided depending on the installation situation of the pressure sensor 10 is considered as an example in which the detection electrode 60 has one first portion 61. In addition, for example, a case in which an interval between the first bridge electrode 51 and the second bridge electrode 52 and an interval between the third bridge electrode 53 and the fourth bridge electrode 54 are narrower than an interval between the second bridge electrode 52 and the third bridge electrode 53 and an interval between the fourth bridge electrode 54 and the first bridge electrode 51 is considered as an example in which the detection electrode 60 has the first portion 61 and the third portion 63.

The plurality of bridge electrodes 50 and the detection electrode 60 illustrated in FIGS. 2 and 3 are configured as, for example, a conductive film such as a metal film. The plurality of bridge electrodes 50 and the detection electrode 60 may include any one of Au, Ag, Cu, and Pd. Since the plurality of bridge electrodes 50 and the detection electrode 60 are chemically stable, they contribute to improving the reliability of the pressure sensor 10.

The thickness of the first to fourth bridge electrodes 51 to 54 and the detection electrode 60 can be set to, for example, 50 nm to 500 nm and preferably 100 nm to 300 nm. The plurality of bridge electrodes 50 and the detection electrode 60 can be formed by a thin film method such as sputtering or a vapor deposition method. In addition, the first to fourth bridge electrodes 51 to 54 and the detection electrode 60 may be formed simultaneously or separately (stepwise).

As illustrated in FIG. 2, the first to fourth portions 61 to 64 of the detection electrode 60 are individually connected to the circuit substrate 16 by intermediate wires 19b. As illustrated in FIG. 2, the resistance change detection unit 80 composed of a first resistance detection unit 81, a second resistance detection unit 82, a third resistance detection unit 83, and a fourth resistance detection unit 84 is provided in the circuit substrate 16.

As illustrated in FIGS. 2 and 3, the resistance change detection unit 80 detects a change in resistance between the detection electrode 60 and at least one of the plurality of bridge electrodes 50. As illustrated in FIG. 3, the first resistance detection unit 81 has, for example, a first detection resistor Ra and a second detection resistor Rb and detects a change in resistance between the first and second bridge electrodes 51 and 52 and the first portion 61 using a change in the potential of Port1. The first portion 61 formed on the membrane 22 is electrically connected to the first resistance detection unit 81.

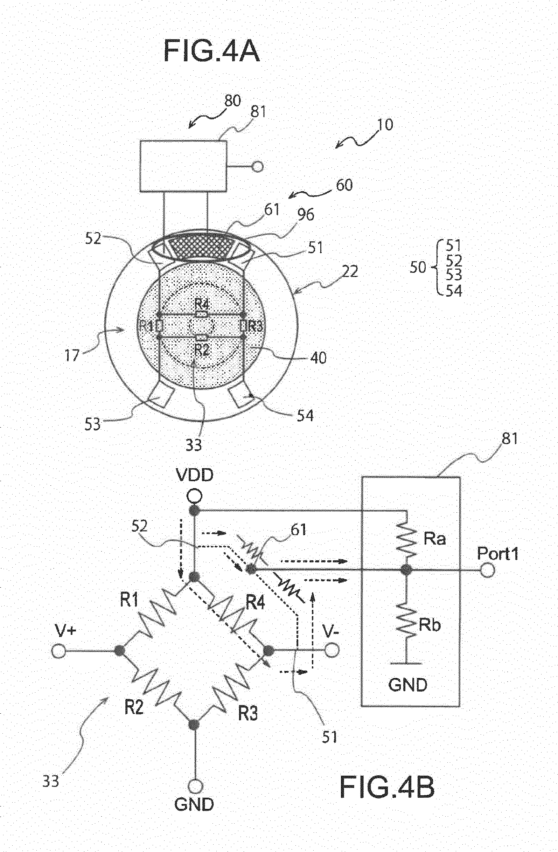

FIGS. 4A and 4B are conceptual diagrams illustrating a detection operation of detecting a water droplet 96 formed on membrane 22 with the first portion 61 and the first resistance detection unit 81. FIG. 4A illustrates an example of an adhesion state of the water droplet 96 on the membrane 22, and FIG. 4B illustrates an electrical change detected by the first resistance detection unit 81 in a case in which the water droplet 96 adheres. When the water droplet 96 illustrated in FIG. 4A is absent as illustrated in FIG. 3, no current flows between the first and second bridge electrodes 51 and 52 and the first portion 61 disposed between the first and second bridge electrodes 51 and 52. Therefore, the potential detected at Port1 of the first resistance detection unit 81 has a constant value that is determined by the power supply voltage VDD, the first detection resistor Ra, and the second detection resistor Rb.

On the other hand, when the water droplet 96 is formed between the first and second bridge electrodes 51 and 52 and the first portion 61 on the membrane 22 as illustrated in FIG. 4A, a current flows between the first and second bridge electrodes 51 and 52 and the first portion 61, as represented by dotted arrows in FIG. 4B. Therefore, the potential detected at Port1 of the first resistance detection unit 81 changes as compared to a case in which the water droplet 96 is not formed, and the first resistance detection unit 81 can detect a change in resistance between the first and second bridge electrodes 51 and 52 and the first portion 61.

As illustrated in FIG. 3, the second resistance detection unit 82 has the first detection resistor Ra and the second detection resistor Rb similarly to the first resistance detection unit 81 and detects a change in resistance between the second and third bridge electrodes 52 and 53 and the second portion 62 using a change in the potential of Port2. The second portion 62 formed on the membrane 22 is electrically connected to the second resistance detection unit 82. The second resistance detection unit 82 detects the water droplet formed on the outer surface 17 of the membrane 22 in the same manner as the first resistance detection unit 81 described with reference to FIGS. 4A and 4B.

As illustrated in FIG. 3, the detection electrode 60 has the first portion 61 and the second portion 62 that are disposed on the membrane 22 with the second bridge electrode 52, which is one of the plurality of bridge electrodes 50, interposed therebetween. The first portion 61 and the second portion 62 are not electrically connected to each other. In the pressure sensor 10, the resistance change detection unit 80 having the first resistance detection unit 81 and the second resistance detection unit 82 independently detects a change in resistance between the first portion 61 and the first and second bridge electrodes 51 and 52 and a change in resistance between the second portion 62 and the second and third bridge electrodes 52 and 53.

In addition, the third resistance detection unit 83 and the fourth resistance detection unit 84 illustrated in FIG. 3 have the first detection resistor Ra and the second detection resistor Rb similarly to the first resistance detection unit 81 and detect a change in resistance between the third and fourth bridge electrodes 53 and 54 and the third portion 63 and a change in resistance between the fourth and first bridge electrodes 54 and 51 and the fourth portion 64 using changes in the potential of Port3 and Port4, respectively. The third portion 63 and the fourth portion 64 formed on the membrane 22 are electrically connected to the third resistance detection unit 83 and the fourth resistance detection unit 84, respectively. The third resistance detection unit 83 and the fourth resistance detection unit 84 detect the water droplets formed on the outer surface 17 of the membrane 22 in the same manner as the first resistance detection unit 81 described with reference to FIGS. 4A and 4B.

In the pressure sensor 10, the detection electrode 60 which constitutes a portion of the outer surface 17 of the membrane 22 together with the plurality of bridge electrodes 50 is provided between any two of the first to fourth bridge electrodes 51 to 54. Then, the resistance change detection unit 80 that detects a change in resistance between the detection electrode 60 and at least one of the first to fourth bridge electrodes 51 to 54 detects the adhesion of the water droplet or the like between the detection electrode 60 and the bridge electrodes 51 to 54. Therefore, the pressure sensor 10 can detect the formation of the water droplet on the outer surface 17 before the water droplet grows to a size at which the water droplet spreads between the first to fourth bridge electrodes 51 to 54.

Further, since the detection electrode 60 has the first portion 61 and the second portion 62, the pressure sensor 10 can detect the formation of water droplets or the like in a plurality of regions including a region interposed between the first bridge electrode 51 and the second bridge electrode 52 and a region interposed between the second bridge electrode 52 and the third bridge electrode 53. In addition, since the pressure sensor 10 has the first to fourth resistance detection units 81 to 84 for independently detecting water droplets or the like, the pressure sensor 10 can distinguish and detect which portion on the membrane 22 the water droplet or the like adheres to.

Further, the object to be detected by the detection electrode 60 and the resistance change detection unit 80 in the pressure sensor 10 is not limited to the water droplets formed on the membrane 22. The detection electrode 60 and the resistance change detection unit 80 can also detect conductive dust or the like that adheres across the detection electrode 60 and the first to fourth bridge electrodes 51 to 54.

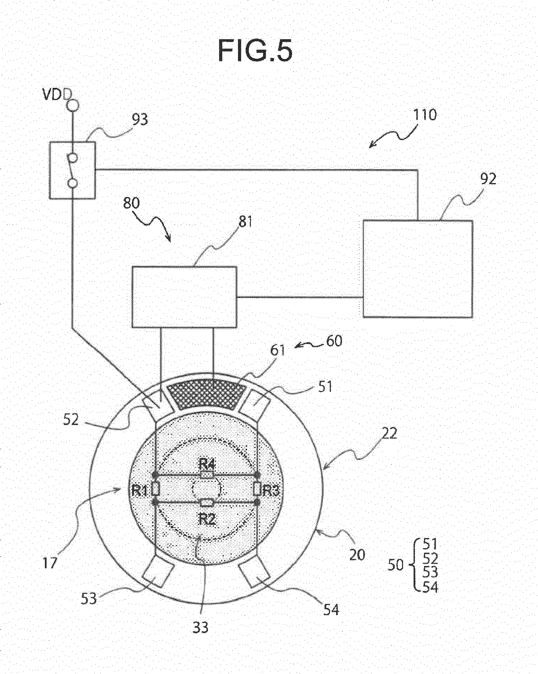

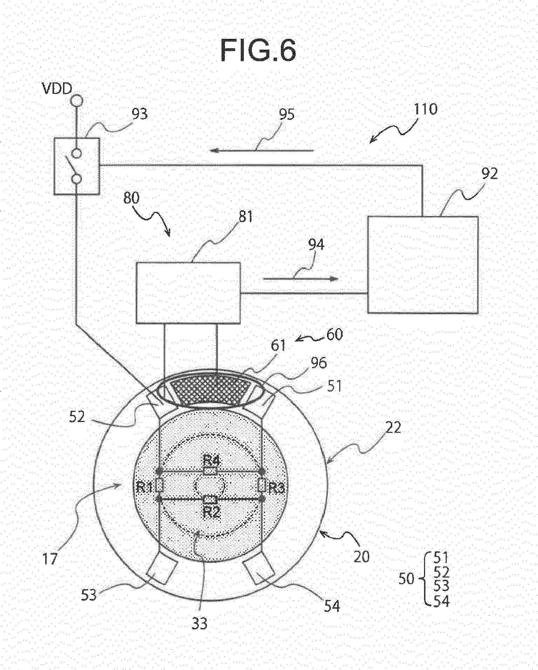

FIGS. 5 and 6 are conceptual diagrams illustrating an operation of a pressure sensor 110 according to a first modification example when the water droplet 96 is detected. The pressure sensor 110 according to the first modification example is the same as the pressure sensor 10 illustrated in FIGS. 1 to 4 except that it has a switch 93 for switching the ON and OFF states of the power supply voltage VDD and an MCU 92 for controlling the operation of the switch 93. In the description of the pressure sensor 110, only differences from the pressure sensor 10 will be described, and the description of points in common with the pressure sensor 10 will be omitted.

FIG. 5 is a conceptual diagram illustrating the membrane 22, in which the water droplet 96 is not formed on the outer surface 17, and circuits and the like which are connected to the bridge electrodes 51 to 54 and the detection electrode 60 on the membrane 22. In addition, FIG. 6 is a conceptual diagram illustrating the membrane 22, in which the water droplet 96 is formed on the outer surface 17, and the circuits and the like which are connected to the bridge electrodes 51 to 54 and the detection electrode 60 on the membrane 22. Further, in FIGS. 5 and 6, the other portions of the detection electrode 60 except for the first portion 61 and the other portions of the resistance change detection unit 80 except for the first resistance detection unit 81 are not illustrated.

As illustrated in FIG. 5, during the operation of the pressure sensor 110, the MCU 92 turns on the switch 93 that connects the power supply voltage VDD and the second bridge electrode 52 to supply power to the Wheatstone bridge circuit 33. Then, the Wheatstone bridge circuit 33 generates an output corresponding to the amount of deformation of the membrane 22, and the pressure sensor 110 detects the pressure of the fluid acting on the membrane 22.

In the state illustrated in FIG. 5, since the water droplet 96 is not formed on the outer surface 17 of the membrane 22, no current flows between the first and second bridge electrodes 51 and 52 and the first portion 61. Therefore, the first resistance detection unit 81 of the resistance change detection unit 80 does not detect a change in resistance caused by the formation of the water droplet, and the MCU 92 to which a water droplet detection signal is not transmitted from the resistance change detection unit 80 keeps the switch 93 in the ON state. Therefore, the pressure detection operation of the pressure sensor 10 continues.

On the other hand, when the water droplet 96 is formed on the outer surface 17 of the membrane 22 as illustrated in FIG. 6, the resistance between the first and second bridge electrodes 51 and 52 and the first portion 61 changes, and the resistance change detection unit 80 detects the change in the resistance. When detecting the change in the resistance, the resistance change detection unit 80 transmits, to the MCU 92, the water droplet detection signal indicating that the water droplet 96 has been detected (arrow 94). When the water droplet detection signal is input to the MCU 92, the MCU 92 transmits a signal to the switch 93 (arrow 95) to turn off the switch 93.

In this pressure sensor 110, when the resistance change detection unit 80 detects the water droplet 96 formed on the outer surface 17 of the membrane 22, the MCU 92 automatically cuts off the power supply voltage VDD transmitted to the Wheatstone bridge circuit 33. Therefore, the pressure sensor 110 can prevent the detection operation of the pressure sensor 110 from being continued even after the water droplet 96 is formed and can suitably prevent a problem such as ion migration of a material forming the electrode. In addition, the pressure sensor 110 according to the first modification example has the same effects as the pressure sensor 10 according to the first embodiment.

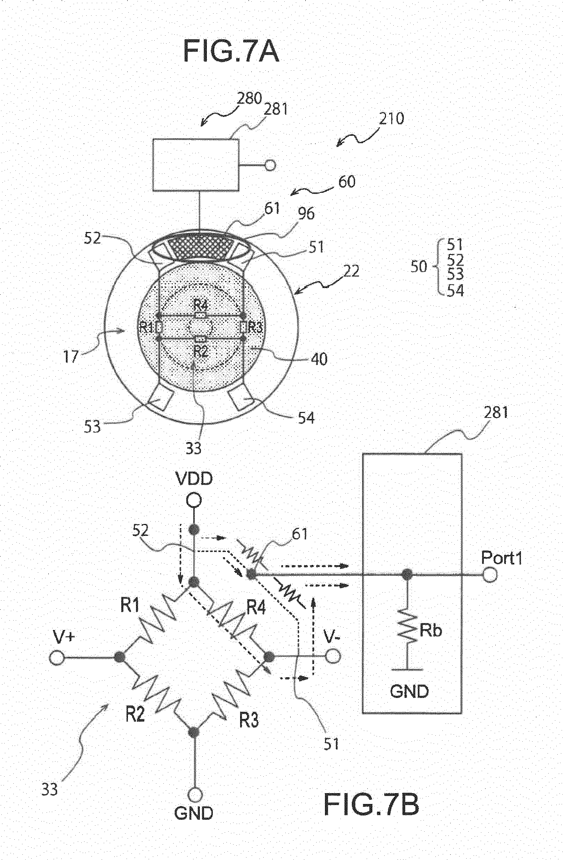

FIGS. 7A and 7B are conceptual diagrams illustrating a detection operation of the water droplet 96 by a resistance change detection unit 280 of a pressure sensor 210 according to a second modification example. FIG. 7A illustrates an example of a state in which the water droplet 96 adheres onto the membrane 22, and FIG. 7B illustrates an electrical change detected by a first resistance detection unit 281 in a case in which the water droplet 96 adheres. The pressure sensor 210 is the same as the pressure sensor 10 except that a circuit configuration of the first resistance detection unit 281 and the like (second to fourth resistance detection units are not illustrated) included in the resistance change detection unit 280 is different from that of the first resistance detection unit 81 and the like illustrated in FIGS. 4A and 4B. For the pressure sensor 210, the description will focus on the differences from the pressure sensor 10, and the description of points in common with the pressure sensor 10 will be omitted.

The resistance change detection unit 280 illustrated in FIGS. 7A and 7B detects a change in resistance between the detection electrode 60 and at least one of the plurality of bridge electrodes 50, similarly to the resistance change detection unit 80 of the pressure sensor 10. The resistance change detection unit 280 has first to fourth resistance detection units, similarly to the resistance change detection unit 80 illustrated in FIGS. 2 and 3, but the illustration of the resistance detection units other than the first resistance detection unit 281 will be omitted.

As illustrated in FIGS. 7A and 7B, the first resistance detection unit 281 has, for example, a second detection resistor Rb and detects a change in resistance between the first and second bridge electrodes 51 and 52 and the first portion 61 using a change in the potential of Port1. When the water droplet 96 illustrated in FIG. 7A is absent, no current flows between the first and second bridge electrodes 51 and 52 and the first portion 61 that is disposed between the first and second bridge electrodes 51 and 52, and Port1 of the first resistance detection unit 281 is simply connected to GND.

On the other hand, as illustrated in FIG. 7A, when the water droplet 96 is formed between the first and second bridge electrodes 51 and 52 and the first portion 61 on the membrane 22, a current flows between the first and second bridge electrodes 51 and 52 and the first portion 61, as represented by dotted arrows in FIG. 7B. Therefore, the potential detected at Port1 of the first resistance detection unit 281 changes as compared to a case in which the water droplet 96 is not formed, and the first resistance detection unit 281 can detect a change in resistance between the first and second bridge electrodes 51 and 52 and the first portion 61.

As described above, the first resistance detection unit 281 having a pull-down circuit illustrated in FIG. 7B can also detect whether or not the water droplet 96 is present in the same manner as the first resistance detection unit 81 illustrated in FIG. 4B. Further, the second to fourth resistance detection units of the pressure sensor 210 have the same circuit as the first resistance detection unit 281 and can detect the water droplets formed on the outer surface 17 of the membrane 22 in the same manner as the first resistance detection unit 281.

In addition, the pressure sensor 210 having the resistance change detection unit 280 illustrated in FIGS. 7A and 7B has the same effects as the pressure sensor 10 having the resistance change detection unit 80 illustrated in FIGS. 4A and 4B.

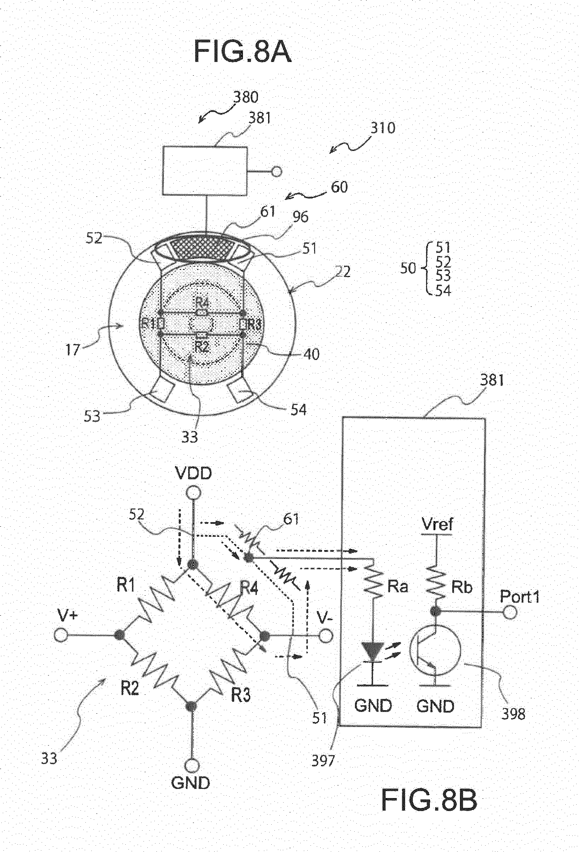

FIGS. 8A and 8B are conceptual diagrams illustrating a detection operation of the water droplet 96 by a resistance change detection unit 380 of a pressure sensor 310 according to a third modification example. FIG. 8A illustrates an example of a state in which the water droplet 96 adheres onto the membrane 22, and FIG. 8B illustrates an electrical change detected by a first resistance detection unit 381 in a case in which the water droplet 96 adheres. The pressure sensor 310 is the same as the pressure sensor 10 except that a circuit configuration of the first resistance detection unit 381 and the like (second to fourth resistance detection units are not illustrated) included in the resistance change detection unit 380 is different from that of the first resistance detection unit 81 and the like illustrated in FIGS. 4A and 4B. For the pressure sensor 310, the description will focus on the differences from the pressure sensor 10, and the description of points in common with the pressure sensor 10 will be omitted.

The resistance change detection unit 380 illustrated in FIGS. 8A and 8B detects a change in resistance between the detection electrode 60 and at least one of the plurality of bridge electrodes 50, similarly to the resistance change detection unit 80 of the pressure sensor 10. The resistance change detection unit 380 has first to fourth resistance detection units, similarly to the resistance change detection unit 80 illustrated in FIGS. 2 and 3, but the illustration of the resistance detection units other than the first resistance detection unit 381 will be omitted.

As illustrated in FIG. 8B, the first resistance detection unit 381 has, for example, a first detection resistor Ra, a second detection resistor Rb, a photodiode 397, and a phototransistor 398 and detects a change in resistance between the first and second bridge electrodes 51 and 52 and the first portion 61 using a change in the potential of Port1. When the water droplet 96 illustrated in FIG. 8A is absent, no current flows between the first and second bridge electrodes 51 and 52 and the first portion 61 that is disposed between the first and second bridge electrodes 51 and 52, and the photodiode 397 is turned off. Therefore, no current flows to the phototransistor 398.

On the other hand, as illustrated in FIG. 8A, when the water droplet 96 is formed between the first and second bridge electrodes 51 and 52 and the first portion 61 on the membrane 22, a current flows between the first and second bridge electrodes 51 and 52 and the first portion 61, as represented by dotted arrows in FIG. 8B. Therefore, the photodiode 397 of the first resistance detection unit 381 is turned on, and a current flows to the phototransistor 398. As a result, the potential at Port1 of the first resistance detection unit 381 changes as compared to a case in which the water droplet 96 is not formed, and the first resistance detection unit 381 can detect a change in resistance between the first and second bridge electrodes 51 and 52 and the first portion 61.

As described above, the first resistance detection unit 381 having the circuit using the phototransistor 398 illustrated in FIG. 8B can also detect whether or not the water droplet 96 is present, similarly to the first resistance detection unit 81 illustrated in FIG. 4B. Further, the second to fourth resistance detection units of the pressure sensor 310 have the same circuit as the first resistance detection unit 381 and can detect the water droplets formed on the outer surface 17 of the membrane 22, similarly to the first resistance detection unit 381.

In addition, the pressure sensor 310 having the resistance change detection unit 380 illustrated in FIGS. 8A and 8B has the same effects as the pressure sensor 10 having the resistance change detection unit 80 illustrated in FIGS. 4A and 4B.

Further, as can be seen from the comparison among FIGS. 4A and 4B, FIGS. 7A and 7B, and FIGS. 8A and 8B, various circuits, such as a pull-down circuit, a pull-up circuit, a constant current circuit, and a circuit using a phototransistor, are given as examples of the circuit for detecting a change in resistance between the first to fourth bridge electrodes 51 to 54 and the detection electrode 60. However, the present invention is not limited thereto.

### Second Embodiment

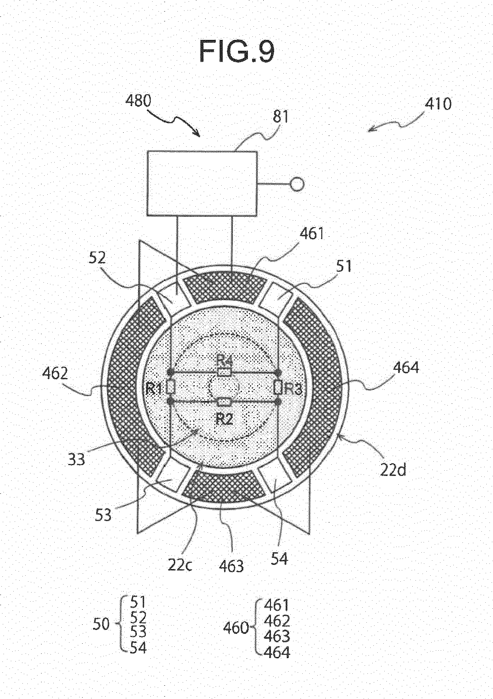

FIG. 9 is a schematic plan view illustrating a pressure sensor 410 according to a second embodiment as viewed from above. The pressure sensor 410 is different from the pressure sensor 10 illustrated in FIG. 3 and the like in that a first portion 461, a second portion 462, a third portion 463, and a fourth portion 464 constituting a detection electrode 460 are electrically connected to one another and a resistance change detection unit 480 has only the first resistance detection unit 81 illustrated in FIG. 3. However, the pressure sensor 410 is the same as the pressure sensor 10 except for the above-described differences related to the detection electrode 460 and the resistance change detection unit 480. The description of the pressure sensor 410 will focus on the differences from the pressure sensor 10. Points in common with the pressure sensor 10 are denoted by the same reference numerals, and the description thereof will be omitted.

As illustrated in FIG. 9, each of the first to fourth portions 461 to 464 of the detection electrode 460 is disposed between one bridge electrode 51, 52, 53, or 54 and another bridge electrode 51, 52, 53, or 54 through the first direction D1 which is a direction (circumferential direction) surrounding the central region 22c, similarly to the first to fourth portions 61 to 64 of the detection electrode 60 illustrated in FIG. 3.

The first portion 461 as the first detection portion and the second portion 462 as the second detection portion are disposed on the membrane 22 with the second bridge electrode 52, which is one of the plurality of bridge electrodes 50, interposed therebetween. The second portion 462 and the third portion 463, the third portion 463 and the fourth portion 464, and the fourth portion 464 and the first portion 461 are disposed on the membrane 22 with the third bridge electrode 53, the fourth bridge electrode 54, and the first bridge electrode 51 interposed therebetween, respectively.

As illustrated in FIG. 9, the first portion 461 as the first detection portion, the second portion 462 as the second detection portion, the third portion 463 as the third detection portion, and the fourth portion 464 as the fourth detection portion constituting the detection electrode 460 are electrically connected to one another, unlike the first to fourth portions 61 to 64 illustrated in FIG. 3. Therefore, the first resistance detection unit 81 electrically connected to the second bridge electrode 52 and the first portion 461 can detect a change in resistance and detect the formation of the water droplet not only in a case in which the water droplet 96 (see FIGS. 4A and 4B) is formed across the first portion 461 and the first or second bridge electrode 51 or 52, but also in a case in which the water droplet is formed across the second to fourth portions 462 to 464 and the first to fourth bridge electrodes 51 to 54 adjacent thereto.

The pressure sensor 410 can detect the water droplets around the plurality of bridge electrodes 50 with a simple circuit. In addition, the pressure sensor 410 has the same effects as the pressure sensor 10 with respect to the points in common with the pressure sensor 10.

### Third Embodiment

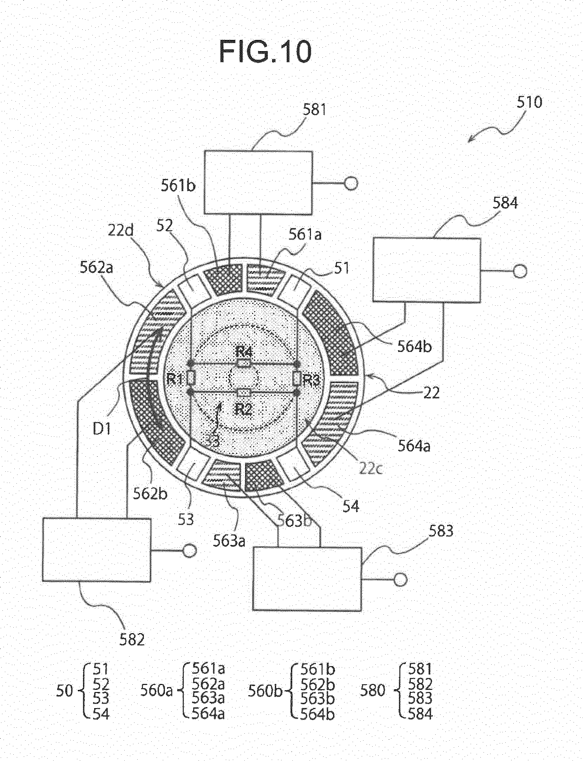

FIG. 10 is a schematic plan view illustrating a pressure sensor 510 according to a third embodiment as viewed from above. The pressure sensor 510 is different from the pressure sensor 10 according to the first embodiment in that it has a first detection electrode 560a and a second detection electrode 560b instead of the detection electrode 60 illustrated in FIG. 3 and a resistance change detection unit 580 is different from the resistance change detection unit 80 illustrated in FIG. 3. However, the pressure sensor 510 is the same as the pressure sensor 10 except for the differences, such as the first detection electrode 560a, the second detection electrode 560b, the resistance change detection unit 580. The description of the pressure sensor 510 will focus on the differences from the pressure sensor 10, and the description of points in common with the pressure sensor 10 will be omitted.

As illustrated in FIG. 10, the pressure sensors 510 has the first detection electrode 560a and the second detection electrode 560b that are disposed between one of the first to fourth bridge electrodes 51 to 54 and another one of the first to fourth bridge electrodes 51 to 54 on the membrane 22 and that are provided separately from any of the first to fourth bridge electrodes 51 to 54. In addition, the first detection electrode 560a has a first electrode first portion 561a, a first electrode second portion 562a, a first electrode third portion 563a, and a first electrode fourth portion 564a. Further, the second detection electrode 560b has a second electrode first portion 561b, a second electrode second portion 562b, a second electrode third portion 563b, and a second electrode fourth portion 564b.

As illustrated in FIG. 10, as the first to fourth bridge electrodes 51 to 54 constitute a portion of the outer surface 17 on the membrane 22 of the pressure sensor 510, the first detection electrode 560a and the second detection electrode 560b constitute another portion of the outer surface 17. In addition, the first detection electrode 560a and the second detection electrode 560b are provided side by side between the first to fourth bridge electrodes 51 to 54, but are provided separately from each other.

Further, the first to fourth bridge electrodes 51 to 54, the first electrode first portion 561a to the first electrode fourth portion 564a constituting the first detection electrode 560a, and the second electrode first portion 561b to the second electrode fourth portion 564b constituting the second detection electrode 560b are disposed in the outer peripheral region 22d surrounding the central region 22c, in which the Wheatstone bridge circuit 33 is disposed, on the membrane 22. The first detection electrode 560a and the second detection electrode 560b are disposed between one of the first to fourth bridge electrodes 51 to 54 and another one of the first to fourth bridge electrodes 51 to 54 in the first direction D1 surrounding the central region 22c.

For example, the first electrode first portion 561a and the second electrode first portion 561b, which are the first detection portions, are disposed between the first bridge electrode 51 and the second bridge electrode 52 in the first direction D 1. Similarly, the first electrode second portion 562a and the second electrode second portion 562b, which are the second detection portions, are disposed between the second bridge electrode 52 and the third bridge electrode 53, the first electrode third portion 563a and the second electrode third portion 563b, which are the third detection portions, are disposed between the third bridge electrode 53 and the fourth bridge electrode 54, and the first electrode fourth portion 564a and the second electrode fourth portion 564b, which are the fourth detection portions, are disposed between the fourth bridge electrode 54 and the first bridge electrode 51.

As illustrated in FIG. 10, the pressure sensor 510 has a resistance change detection unit 580 that detects a change in resistance between the first detection electrode 560a and the second detection electrode 560b. The resistance change detection unit 580 has a first resistance detection unit 581, a second resistance detection unit 582, a third resistance detection unit 583, and a fourth resistance detection unit 584.

The first to fourth resistance detection units 581 to 584 independently detect a change in resistance between the first portions 561a and 561b, a change in resistance between the second portions 562a and 562b, a change in resistance between the third portions 563a and 563b, and a change in resistance between the fourth portions 564a and 564b in the first detection electrode 560a and the second detection electrode 560b, respectively. That is, the first detection electrode 560a and the second detection electrode 560b have the first electrode first portion 561a and the first electrode second portion 562a, and the second electrode first portion 561b and the second electrode second portion 562b which are disposed on the membrane 22, with the second bridge electrode 52 interposed therebetween, respectively.

As illustrated in FIG. 10, the first resistance detection unit 581 is electrically connected to the first electrode first portion 561a and the second electrode first portion 561b that are disposed side by side in the outer peripheral region 22d on the membrane 22 and detects a change in resistance between the first electrode first portion 561a and the second electrode first portion 561b.

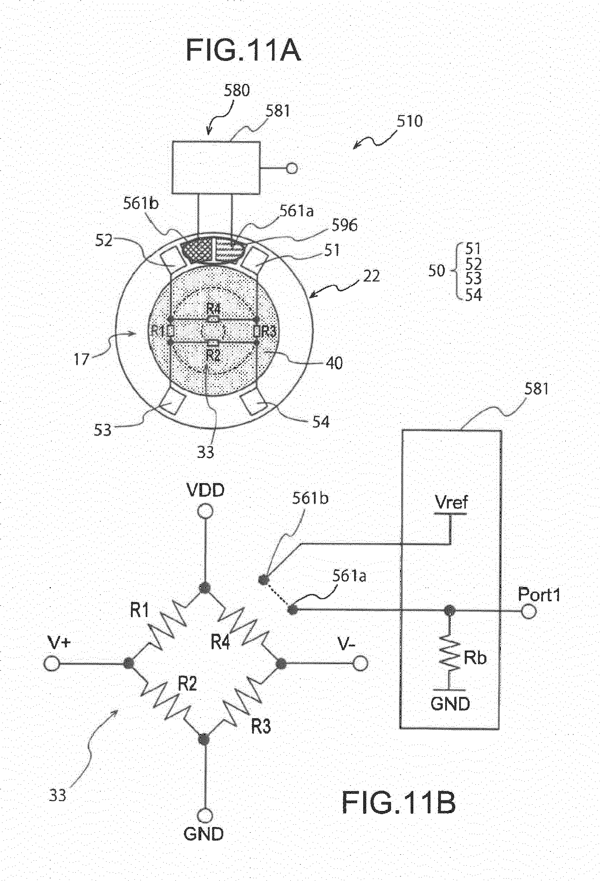

FIGS. 11A and 11B are conceptual diagrams illustrating a detection operation of a water droplet 596 by the first resistance detection unit 581 in the resistance change detection unit 580 illustrated in FIG. 10. FIG. 11A illustrates a state in which the water droplet 596 is formed across the first electrode first portion 561a and the second electrode first portion 561b on the outer surface 17 of the membrane 22. FIG. 11B illustrates a circuit configuration of the Wheatstone bridge circuit 33 and the first resistance detection unit 581 in the pressure sensor 510 illustrated in FIG. 11A.

As illustrated in FIG. 11B, in the first resistance detection unit 581, a reference voltage Vref is connected to the second electrode first portion 561b, and the first electrode first portion 561a is connected to GND through a second detection resistor Rb. In a state in which the water droplet 596 illustrated in FIG. 11A is not formed, the first electrode first portion 561a and the second electrode first portion 561b are not electrically connected to each other, and Port1 of the first resistance detection unit 581 has the same potential as GND.

On the other hand, when the water droplet 596 is formed across the first electrode first portion 561a and the second electrode first portion 561b as illustrated in FIG. 11A, a current represented by a dotted line flows between the first electrode first portion 561a and the second electrode first portion 561b. This makes it possible for the first resistance detection unit 581 to detect a change in resistance between the first electrode first portion 561a and the second electrode first portion 561b as a change in the potential of Port1.

In addition, in FIGS. 11A and 11B, the illustration of the second to fourth resistance detection units 582 to 584 is omitted, but the second to fourth resistance detection units 582 to 584 detect a change in resistance in the same manner as the first resistance detection unit 581. That is, the second resistance detection unit 582 illustrated in FIG. 10 detects a change in resistance between the first electrode second portion 562a and the second electrode second portion 562b, the third resistance detection unit 583 detects a change in resistance between the first electrode third portion 563a and the second electrode third portion 563b, and the fourth resistance detection unit 584 detects a change in resistance between the first electrode fourth portion 564a and the second electrode fourth portion 564b.

As described above, the resistance change detection unit 580 of the pressure sensor 510 independently detects the change in resistance between the first electrode first portion 561a and the second electrode first portion 561b and the change in resistance between the first electrode second portion 562a and the second electrode second portion 562b, using the first resistance detection unit 581 and the second resistance detection unit 582, respectively. In addition, the resistance change detection unit 580 independently detects the change in resistance between the first electrode third portion 563a and the second electrode third portion 563b and the change in resistance between the first electrode fourth portion 564a and the second electrode fourth portion 564b, using the third resistance detection unit 583 and the fourth resistance detection unit 584, respectively.

The pressure sensor 510 illustrated in FIG. 10 and FIGS. 11A and 11B has a pair of the first detection electrode 560a and the second detection electrode 560b provided between two of the plurality of bridge electrodes 50 and can detect a change in resistance between the first detection electrode 560a and the second detection electrode 560b to detect the water droplet 596 or the like formed between the bridge electrodes 50. Since the water droplet is detected by the first detection electrode 560a and the second detection electrode 560b, the pressure sensor 510 can detect the water droplet formed on the outer surface 17 of the pressure sensor 510 before the water droplet in contact with the bridge electrode 50 becomes larger. Further, the pressure sensor 510 can detect the water droplet using the resistance change detection unit 580 that is configured by an electric circuit completely independent of the Wheatstone bridge circuit 33.

In addition, since the first detection electrode 560a and the second detection electrode 560b have the first to fourth portions 561a to 564a and 561b to 564b, respectively, the pressure sensor 510 can detect the formation of the water droplets or the like in a plurality of regions including a region interposed between the first bridge electrode 51 and the second bridge electrode 52 and a region interposed between the second bridge electrode 52 and the third bridge electrode 53. Further, since the pressure sensor 510 has the first to fourth resistance detection units 581 to 584 for independently detecting the water droplets or the like, the pressure sensor 510 can distinguish and detect which portion of the membrane 22 the water droplet or the like adheres to.

In addition, the pressure sensor 510 has the same effects as the pressure sensor 10 with respect to the portions in common with the pressure sensor 10.

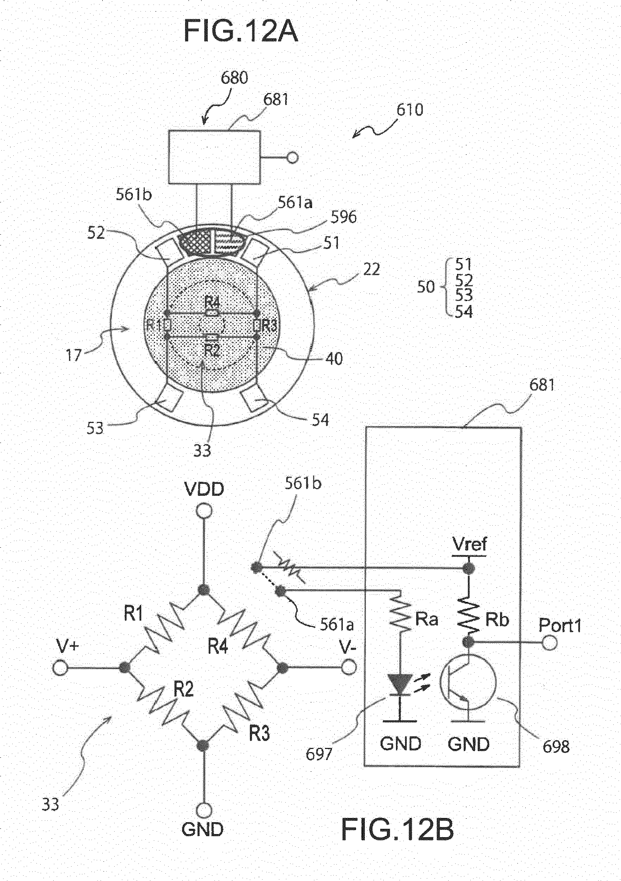

FIGS. 12A and 12B are conceptual diagrams illustrating a detection operation of the water droplet 596 by a resistance change detection unit 680 of a pressure sensor 610 according to a fourth modification example. FIG. 12A illustrates an example of a state in which the water droplet 596 adheres onto the membrane 22, and FIG. 12B illustrates an electrical change detected by a first resistance detection unit 681 in a case in which the water droplet 596 adheres. The pressure sensor 610 is the same as the pressure sensor 510 except that a circuit configuration of the first resistance detection unit 681 and the like (second to fourth resistance detection units are not illustrated) included in the resistance change detection unit 680 is different from that of the first resistance detection unit 581 and the like illustrated in FIGS. 11A and 11B. For the pressure sensor 610, the description will focus on the differences from the pressure sensor 510, and the description of points in common with the pressure sensor 510 will be omitted.

The resistance change detection unit 680 illustrated in FIGS. 12A and 12B detects a change in resistance between the first detection electrode 560a and the second detection electrode 560b, similarly to the resistance change detection unit 580 of the pressure sensor 510. The resistance change detection unit 680 has the first to fourth resistance detection units, similarly to the resistance change detection unit 580 illustrated in FIG. 10, and the resistance detection units other than the first resistance detection unit 681 that detects the change in resistance between the first electrode first portion 561a and the second electrode first portion 561b are not illustrated in FIGS. 12A and 12B.

As illustrated in FIG. 12B, the first resistance detection unit 681 has, for example, a first detection resistor Ra, a second detection resistor Rb, a photodiode 697, and a phototransistor 698 and detects the change in resistance between the first electrode first portion 561a and the second electrode first portion 561b using a change in the potential of Port1. When the water droplet 596 illustrated in FIG. 12A is absent, no current flows between the first electrode first portion 561a and the second electrode first portion 561b, and the photodiode 697 is turned off. Therefore, no current flows to the phototransistor 698.

On the other hand, when the water droplet 596 is formed between the first electrode first portion 561a and the second electrode first portion 561b on the membrane 22 as illustrated in FIG. 12A, a current flows between the first electrode first portion 561a and the second electrode first portion 561b as represented by a dotted line in FIG. 12B. Therefore, the photodiode 697 of the first resistance detection unit 681 is turned on, and a current flows to the phototransistor 698. As a result, the potential at Port1 of the first resistance detection unit 681 changes as compared to a case in which the water droplet 596 is not formed, and the first resistance detection unit 681 can detect a change in resistance caused by the formation of the water droplet between the first electrode first portion 561a and the second electrode first portion 561b.

As described above, the first resistance detection unit 681 having the circuit using the phototransistor 698 illustrated in FIG. 12B can also detect whether or not the water droplet 596 is present, similarly to the first resistance detection unit 581 illustrated in FIG. 11B. Further, the second to fourth resistance detection units of the pressure sensor 610 also have the same circuit as the first resistance detection unit 681 and can detect the water droplets formed on the outer surface 17 of the membrane 22 similarly to the first resistance detection unit 681.

In addition, the pressure sensor 610 having the resistance change detection unit 680 illustrated in FIGS. 12A and 12B has the same effects as the pressure sensor 510 with respect to the points in common with the pressure sensor 510 having the resistance change detection unit 580 illustrated in FIGS. 11A and 11B.

### Fourth Embodiment

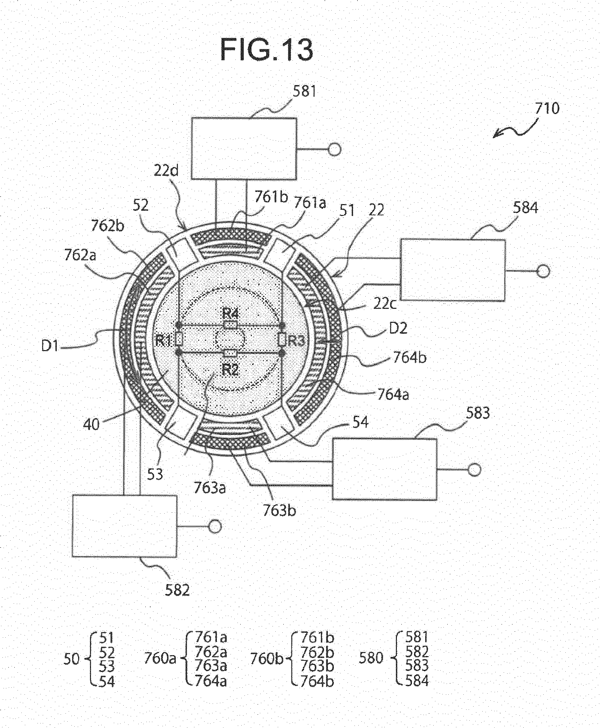

FIG. 13 is a schematic plan view illustrating a pressure sensor 710 according to a fourth embodiment as viewed from above. The pressure sensor 710 is different from the pressure sensor 510 according to the third embodiment in that it has a first detection electrode 760a and a second detection electrode 760b that are different in shape and arrangement from the first detection electrode 560a and the second detection electrode 560b illustrated in FIG. 10. However, the pressure sensor 710 is the same as the pressure sensor 510 illustrated in FIG. 10 except for the differences related to, for example, the shape and arrangement of the first detection electrode 760a and the second detection electrode 760b. The description of the pressure sensor 710 will focus on the differences from the pressure sensor 510, and the description of points in common with the pressure sensor 510 will be omitted.

As illustrated in FIG. 13, the pressure sensor 710 has the first detection electrode 760a and the second detection electrode 760b that are disposed side by side between one of the first to fourth bridge electrodes 51 to 54 and another one of the first to fourth bridge electrodes 51 to 54 on the membrane 22 and are provided separately from any of the first to fourth bridge electrodes 51 to 54. In addition, the first detection electrode 760a has a first electrode first portion 761a, a first electrode second portion 762a, a first electrode third portion 763a, and a first electrode fourth portion 764a. Further, the second detection electrode 760b has a second electrode first portion 761b, a second electrode second portion 762b, a second electrode third portion 763b and a second electrode fourth portion 764b.

As illustrated in FIG. 13, the first detection electrode 760a and the second detection electrode 760b constitute another portion of the outer surface 17 of the membrane 22 of the pressure sensor 710. In addition, the first to fourth bridge electrodes 51 to 54, the first to fourth portions 761a to 764a constituting the first detection electrode 760a, and the first to fourth portions 761b to 764b constituting the second detection electrode 760b are disposed in the outer peripheral region 22d surrounding the central region 22c, in which the Wheatstone bridge circuit 33 is disposed, on the membrane 22. The first detection electrode 760a and the second detection electrode 760b are provided side by side between the first to fourth bridge electrodes 51 to 54, but are provided separately from each other.

Unlike the first detection electrode 560a and the second detection electrode 560b illustrated in FIG. 10, the first detection electrode 760a and the second detection electrode 760b illustrated in FIG. 13 are disposed between one of the first to fourth bridge electrodes 51 to 54 and another one of the first to fourth bridge electrodes 51 to 54 in a second direction D2 intersecting the first direction D1 which is the direction surrounding the central region 22c. In the example illustrated in FIG. 13, the second direction D2 is a radial direction of the membrane 22. However, the second direction D2 may be another direction intersecting the first direction which is the circumferential direction.

For example, the first electrode first portion 761a and the second electrode first portion 761b are disposed side by side between the first bridge electrode 51 and the second bridge electrode 52 in the second direction D2. Similarly, the first electrode second portion 762a and the second electrode second portion 762b are disposed side by side between the second bridge electrode 52 and the third bridge electrode 53 in the second direction D2, the first electrode third portion 763a and the second electrode third portion 763b are disposed side by side between the third bridge electrode 53 and the fourth bridge electrode 54 in the second direction D2, and the first electrode fourth portion 764a and the second electrode fourth portion 764b are disposed side by side between the fourth bridge electrode 54 and the first bridge electrode 51 in the second direction D2.

The resistance change detection unit 580 included in the pressure sensor 710 is the same as the resistance change detection unit 580 included in the pressure sensor 510 illustrated in FIG. 10. As illustrated in FIG. 13, the resistance change detection unit 580 has first to fourth resistance detection units 581 to 584. The first to fourth resistance detection units 581 to 584 independently detect a change in resistance between the first portions 761a and 761b, a change in resistance between the second portions 762a and 762b, a change in resistance between the third portions 763a and 763b, and a change in resistance between the fourth portions 764a and 764b in the first detection electrode 760a and the second detection electrode 760b, respectively.

In the pressure sensor 710 illustrated in FIG. 13, since the first detection electrode 760a and the second detection electrode 760b having an arc shape are arranged in the second direction D2, it is possible to suitably detect both the water droplets formed in the vicinity of the first to fourth bridge electrodes 51 to 54 and the water droplets formed at an intermediate position that is separated from any of the first to fourth bridge electrodes 51 to 54. That is, the pressure sensor 710 can detect the water droplet formed in the outer peripheral region 22d that is exposed from the protective film 40 on the membrane 22 before the water droplet grows large.

In addition, the shape of the first detection electrode and the second detection electrode illustrated in FIGS. 10 and 13 is not limited to the arc shape and may be wave shapes such as trigonometric function waves and rectangular waves. Further, the first detection electrode and the second detection electrode may partially have a radial shape, a spiral shape, or the like. In addition, the pressure sensor 710 has the same effects as the pressure sensor 510 with respect to the points in common with the pressure sensor 510.

### Fifth Embodiment

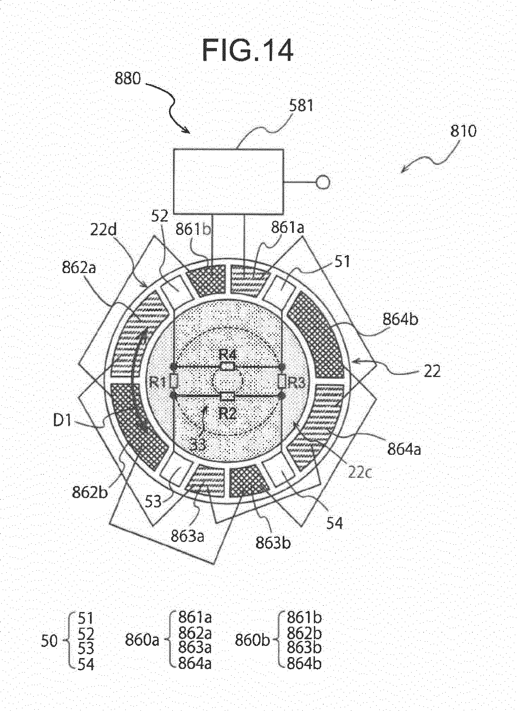

FIG. 14 is a schematic plan view illustrating a pressure sensor 810 according to a fifth embodiment as viewed from above. The pressure sensor 810 is different from the pressure sensor 510 illustrated in FIG. 10 and the like in that first to fourth portions 861a to 864a as detection portions constituting a first detection electrode 860a are electrically connected to one another, first to fourth portions 861b to 864b as detection portions constituting a second detection electrode 860b are electrically connected to one another, and a resistance change detection unit 880 has only the first resistance detection unit 581 illustrated in FIG. 10. However, the pressure sensor 810 is the same as the pressure sensor 510 except for the above-described differences related to the first detection electrode 860a, the second detection electrode 860b, and the resistance change detection unit 880. The description of the pressure sensor 810 will focus on the differences from the pressure sensor 510. Points in common with the pressure sensor 510 are denoted by the same reference numerals, and the description thereof will be omitted.

As illustrated in FIG. 14, each of the first to fourth portions 861a to 864a and 861b to 864b of the first detection electrode 860a and the second detection electrode 860b is disposed between one bridge electrode 51, 52, 53, or 54 and another bridge electrode 51, 52, 53, or 54 in the first direction D1 which is the direction (circumferential direction) surrounding the central region 22c, similarly to each of the first to fourth portions 561a to 564a and 561b to 564b of the first detection electrode 560a and the second detection electrode 560b illustrated in FIG. 10.

In addition, the first portions 861a and 861b and the second portions 862a and 862b of the first detection electrode 860a and the second detection electrode 860b are disposed on the membrane 22 with the second bridge electrode 52, which is one of the plurality of bridge electrodes 50, interposed therebetween. The second portions 862a and 862b and the third portions 863a and 863b, the third portions 863a and 863b and the fourth portions 864a and 864b, and the fourth portions 864a and 864b and the first portions 861a and 861b are disposed on the membrane 22 with the third bridge electrode 53, the fourth bridge electrode 54, and the first bridge electrode 51 interposed therebetween, respectively.

As illustrated in FIG. 14, the first electrode first portion 861a (first detection portion), the first electrode second portion 862a (second detection portion), the first electrode third portion 863a (third detection portion), and the first electrode fourth portion 864a (fourth detection portion) constituting the first detection electrode 860a are electrically connected to one another, unlike the first to fourth portions 561a to 564a illustrated in FIG. 10. In addition, for the second detection electrode 860b paired with each of the first to fourth portions 861a to 864a of the first detection electrode 860a, the second electrode first portion 861b (first detection portion), the second electrode second portion 862b (second detection portion), the second electrode third portion 863b (third detection portion), and the second electrode fourth portion 864b (fourth detection portion) are electrically connected to one another. Therefore, not only in a case in which the water droplet 596 (see FIGS. 11A and 11B) is formed across the first electrode first portion 861a and the second electrode first portion 861b, but also in a case in which the water droplet 596 is formed across the first electrode second portion 862a and the second electrode second portion 862b, across the first electrode third portion 863a and the second electrode third portion 863b, and across the first electrode fourth portion 864a and the second electrode fourth portion 864b, the first resistance detection unit 581 that is electrically connected to the first electrode first portion 861a and the second electrode first portion 861b can detect a change in resistance between the first detection electrode 860a and the second detection electrode 860b and detect the formation of the water droplet.

The pressure sensor 810 can detect the water droplets around the plurality of bridge electrodes 50 with a simple circuit. In addition, the pressure sensor 810 has the same effects as the pressure sensor 510 with respect to the points in common with the pressure sensor 510.

### Sixth Embodiment

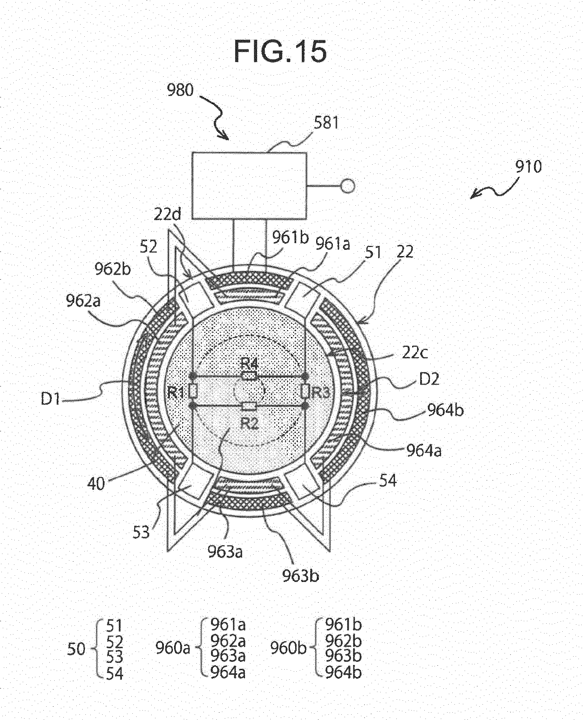

FIG. 15 is a schematic plan view illustrating a pressure sensor 910 according to a sixth embodiment as viewed from above. The pressure sensor 910 is different from the pressure sensor 710 illustrated in FIG. 13 and the like in that first to fourth portions 961a to 964a as detection portions constituting a first detection electrode 960a are electrically connected to one another, first to fourth portions 961b to 964b as detection portions constituting a second detection electrode 960b are electrically connected to one another, and a resistance change detection unit 980 has only the first resistance detection unit 581 illustrated in FIG. 13. However, the pressure sensor 910 is the same as the pressure sensor 710 except for the above-described differences related to the first detection electrode 960a, the second detection electrode 960b, and the resistance change detection unit 980. Points in common with the pressure sensor 710 are denoted by the same reference numerals, and the description thereof will be omitted.

As illustrated in FIG. 15, each of the first portions 961a and 961b as the first detection portions, the second portions 962a and 962b as the second detection portions, the third portions 963a and 963b as the third detection portions, and the fourth portions 964a and 964b as the fourth detection portions in the first detection electrode 960a and the second detection electrode 960b is disposed between one bridge electrode 51, 52, 53, or 54 and another bridge electrode 51, 52, 53, or 54 in the first direction D1 which is the direction surrounding the central region 22c, similarly to the first detection electrode 760a and the second detection electrode 760b illustrated in FIG. 13.

In addition, the first portions 961a and 961b and the second portions 962a and 962b of the first detection electrode 960a and the second detection electrode 960b are disposed on the membrane 22 with the second bridge electrode 52, which is one of the plurality of bridge electrodes 50, interposed therebetween. The second portions 962a and 962b and the third portions 963a and 963b, the third portions 963a and 963b and the fourth portions 964a and 964b, and the fourth portions 964a and 964b and the first portions 961a and 961b are disposed on the membrane 22 with the third bridge electrode 53, the fourth bridge electrode 54, and the first bridge electrode 51 interposed therebetween, respectively.

As illustrated in FIG. 15, the first electrode first portion 961a, the first electrode second portion 962a, the first electrode third portion 963a, and the first electrode fourth portion 964a constituting the first detection electrode 960a are electrically connected to one another, unlike the first to fourth portions 761a to 764a illustrated in FIG. 13. In addition, for the second detection electrode 960b paired with each of the first to fourth portions 961a to 964a of the first detection electrode 960a, the second electrode first portion 961b, the second electrode second portion 962b, the second electrode third portion 963b, and the second electrode fourth portion 964b are electrically connected to one another. Therefore, not only in a case in which a water droplet is formed across the first electrode first portion 961a and the second electrode first portion 961b, but also in a case in which a water droplet is formed across the first electrode second portion 962a and the second electrode second portion 962b, across the first electrode third portion 963a and the second electrode third portion 963b, and across the first electrode fourth portion 964a and the second electrode fourth portion 964b, the first resistance detection unit 581 that is electrically connected to the first electrode first portion 961a and the second electrode first portion 961b can detect a change in resistance between the first detection electrode 960a and the second detection electrode 960b and detect the formation of the water droplet.

The pressure sensor 910 can detect the water droplets around the plurality of bridge electrodes 50 with a simple circuit. In addition, the pressure sensor 910 has the same effects as the pressure sensor 710 with respect to the points in common with the pressure sensor 710.

The content of the present invention has been described above with reference to a plurality of embodiments and modification examples. However, it goes without saying that the technical scope of the present invention is not limited to the above-described embodiments and modification examples, but includes many other embodiments and modification examples. For example, the number of portions included in the detection electrode, the first detection electrode, and the second detection electrode may be 1 to 3 or may be 5 or more. In addition, the detection electrode, the first detection electrode, and the second detection electrode may be disposed on the outer surface 17 of the central region 22c on the membrane 22.

### EXPLANATIONS OF LETTERS OR NUMERALS

10, 110, 210, 310, 410, 510, 610, 710, 810, 910 PRESSURE SENSOR
12 CONNECTION MEMBER
12a THREAD GROOVE
12b FLOW CHANNEL
14 PRESSING MEMBER
16 CIRCUIT SUBSTRATE
17 OUTER SURFACE
19, 19a, 19b INTERMEDIATE WIRE
20 STEM
21 FLANGE PORTION
22 MEMBRANE
22a INNER SURFACE
22b OUTER SURFACE
22c CENTRAL REGION
22d OUTER PERIPHERAL REGION
33 WHEATSTONE BRIDGE CIRCUIT
R1, R2, R3, R4 RESISTOR
34 ELECTRIC WIRE
40 PROTECTIVE FILM
50 PLURALITY OF BRIDGE ELECTRODES
51 FIRST BRIDGE ELECTRODE
52 SECOND BRIDGE ELECTRODE
53 THIRD BRIDGE ELECTRODE
54 FOURTH BRIDGE ELECTRODE
D1 FIRST DIRECTION
D2 SECOND DIRECTION
60, 460 DETECTION ELECTRODE
560a, 760a, 860a, 960a FIRST DETECTION ELECTRODE
560b, 760b, 860b, 960b SECOND DETECTION ELECTRODE
61, 461, 561a, 561b, 761a, 761b, 861a, 861b, 961a, 961b FIRST PORTION
62, 462, 562a, 562b, 762a, 762b, 862a, 862b, 962a, 962b SECOND PORTION
63, 463, 563a, 563b, 763a, 763b, 863a, 863b, 963a, 963b THIRD PORTION
64, 464, 564a, 564b, 764a, 764b, 864a, 864b, 964a, 964b FOURTH PORTION
80, 280, 380, 480, 580, 680, 880, 980 RESISTANCE CHANGE DETECTION UNIT
81, 281, 381, 581, 681 FIRST RESISTANCE DETECTION UNIT
Ra FIRST DETECTION RESISTOR
Rb SECOND DETECTION RESISTOR
82, 582 SECOND RESISTANCE DETECTION UNIT
83, 583 THIRD RESISTANCE DETECTION UNIT
84, 584 FOURTH RESISTANCE DETECTION UNIT
92 MCU
93 SWITCH
94, 95 ARROW
96, 596 WATER DROPLET
697 PHOTODIODE
698 PHOTOTRANSISTOR

## Claims

1. A pressure sensor comprising:
a Wheatstone bridge circuit formed by resistors on a membrane;
bridge electrodes electrically connected to the Wheatstone bridge circuit and constituting a portion of an outer surface of the membrane, wires for connecting the Wheatstone bridge circuit to an outside being connected to the bridge electrodes;
a detection electrode disposed between one of the bridge electrodes and the other one of the bridge electrodes on the membrane, constituting another portion of the outer surface, and provided separately from any of the bridge electrodes; and
a resistance change detection unit detecting a change in resistance between the detection electrode and at least one of the bridge electrodes.

2. The pressure sensor according to claim 1,
wherein the bridge electrodes and the detection electrode are disposed in an outer peripheral region surrounding a central region, in which the Wheatstone bridge circuit is disposed, on the membrane, and
the detection electrode is disposed between the one of the bridge electrodes and the other one of the bridge electrodes in a first direction which is a direction surrounding the central region.

3. The pressure sensor according to claim 1,
wherein the detection electrode has a first detection portion and a second detection portion which are disposed on the membrane with at least one of the bridge electrodes interposed therebetween and are electrically connected to each other.

4. The pressure sensor according to claim 1,
wherein the detection electrode has a first detection portion and a second detection portion which are disposed on the membrane with at least one of the plurality of bridge electrodes interposed therebetween, and
the resistance change detection unit independently detects a change in resistance between the first detection portion and at least one of the bridge electrodes and a change in resistance between the second detection portion and at least one of the bridge electrodes.

5. A pressure sensor comprising:
a Wheatstone bridge circuit formed by resistors on a membrane;
bridge electrodes electrically connected to the Wheatstone bridge circuit and constituting a portion of an outer surface of the membrane, wires for connecting the Wheatstone bridge circuit to an outside being connected to the bridge electrode;
a first detection electrode and a second detection electrode which are disposed side by side between one of the bridge electrodes and the other one of the bridge electrodes on the membrane, constituting another portion of the outer surface, are provided separately from any of the bridge electrodes, and provided separately from each other; and
a resistance change detection unit detecting a change in resistance between the first detection electrode and the second detection electrode.

6. The pressure sensor according to claim 5,
wherein the bridge electrodes, the first detection electrode, and the second detection electrode are disposed on the membrane to be in an outer peripheral region surrounding a central region, in which the Wheatstone bridge circuit is disposed, on the membrane, and
the first detection electrode and the second detection electrode are disposed between the one of the bridge electrodes and the other one of the bridge electrodes in a first direction which is a direction surrounding the central region.

7. The pressure sensor according to claim 5,
wherein the bridge electrodes, the first detection electrode, and the second detection electrode are disposed on the membrane to be in an outer peripheral region surrounding a central region, in which the Wheatstone bridge circuit is disposed, on the membrane, and
the first detection electrode and the second detection electrode are disposed between the one of the bridge electrodes and the other one of the bridge electrodes in a second direction intersecting a first direction which is a direction surrounding the central region.

8. The pressure sensor according to claim 5,
wherein each of the first detection electrode and the second detection electrode has a first detection portion and a second detection portion which are disposed on the membrane with at least one of the bridge electrodes interposed therebetween and are electrically connected to each other.

9. The pressure sensor according to claim 5,
wherein each of the first detection electrode and the second detection electrode has a first detection portion and a second detection portion which are disposed on the membrane with at least one of the bridge electrodes interposed therebetween, and
the resistance change detection unit independently detects a change in resistance between the first detection portion of the first detection electrode and the first detection portion of the second detection electrode, and a change in resistance between the second detection portion of the first detection electrode and the second detection portion of the second detection electrode.
